(19) Europäisches Patentamt
European Patent Office
Office européen des brevets

(11) EP 0 725 094 A2

(12) EUROPÄISCHE PATENTANMELDUNG

(43) Veröffentlichungstag:
07.08.1996 Patentblatt 1996/32

(21) Anmeldenummer: 96101104.6

(22) Anmeldetag: 26.01.1996

(51) Int. Cl.[6]: C08F 285/00, C08L 51/00, C08L 25/02
// (C08F285/00, 212:04)

(84) Benannte Vertragsstaaten:
DE ES FR GB IT NL

(30) Priorität: 03.02.1995 DE 19503545

(71) Anmelder: BASF AKTIENGESELLSCHAFT
67056 Ludwigshafen (DE)

(72) Erfinder:
- Fischer, Wolfgang, Dr.
D-67067 Ludwigshafen (DE)
- Koch, Jürgen, Dr.
D-67141 Neuhofen (DE)
- McKee, Graham E., Dr.
D-67433 Neustadt (DE)

# (54) Teilchenförmige Pfropfcopolymerisate und diese enthaltende thermoplastische Formmassen mit verbesserter Einfärbbarkeit

(57) Teilchenförmige Pfropfcopolymerisate A), aufgebaut aus

$a_1$) 5 bis 70 Gew.-%, bezogen auf A), einer Pfropfgrundlage mit einer Glasübergangstemperatur von weniger als 10°C auf der Basis von

$a_{11}$) 50 bis 99,94 Gew.-%, bezogen auf $a_1$), mindestens eines Alkylacrylats mit 1 bis 30 C-Atomen im Alkylrest,

$a_{12}$) 0 bis 49,9 Gew.-%, bezogen auf $a_1$), eines weiteren, mit $b_{11}$) copolymerisierbaren einfach ungesättigten Monomeren

$a_{13}$) 0,01 bis 5 Gew.-%, bezogen auf $a_1$), polyfunktionellen vernetzend wirkenden Monomeren und

$a_2$) 20 bis 85 Gew.-%, bezogen auf A), einer in Gegenwart der Komponente $a_1$) polymerisierten Stufe aus

$a_{21}$) 95 bis 100 Gew.-%, bezogen auf $a_2$), mindestens eines Monomeren mit einem Brechungsindex $n_D^{20}$ von mehr als 1,51 und

$a_{22}$) 0 bis 5 Gew.-%, bezogen auf $a_2$), eines polyfunktionellen, vernetzend wirkenden Monomeren

und

$a_3$) 10 bis 50 Gew.-%, bezogen auf A), mindestens einer weiteren, in Gegenwart des nach der Herstellung von $a_2$) erhaltenen Produkts, polymerisierten Stufe aus

$a_{31}$) 50 bis 95 Gew.-%, bezogen auf $a_3$), eines vinylaromatischen Monomeren,

$a_{32}$) 5 bis 50 Gew.-%, bezogen auf $a_3$) polaren, copolymerisierbaren Comonomeren aus der Gruppe Acrylnitril, Methacrylnitril, Ester der (Meth)acrylsäure mit 1 bis 20 C-Atomen im Alkylrest, Maleinsäureanhydrid, (Meth)acrylamid und/oder Vinylalkylether mit 1 bis 8 C-Atomen im Alkylrest.

EP 0 725 094 A2

## Beschreibung

Die vorliegende Erfindung betrifft teilchenförmige Pfropfcopolymerisate, aufgebaut aus

$a_1$) 5 bis 70 Gew.-%, bezogen auf A), einer Pfropfgrundlage mit einer Glasübergangstemperatur von weniger als 10°C auf der Basis von

$a_{11}$) 50 bis 99,94 Gew.-%, bezogen auf $a_1$), mindestens eines Alkylacrylats mit 1 bis 30 C-Atomen im Alkylrest,

$a_{12}$) 0 bis 49,9 Gew.-%, bezogen auf $a_1$), eines weiteren, mit $b_{11}$) copolymerisierbaren einfach ungesättigten Monomeren

$a_{13}$) 0,01 bis 5 Gew.-%, bezogen auf $a_1$), polyfunktionellen vernetzend wirkenden Monomeren und

$a_2$) 20 bis 85 Gew.-%, bezogen auf A), einer in Gegenwart der Komponente $a_1$) polymerisierten Stufe aus

$a_{21}$) 95 bis 100 Gew.-%, bezogen auf $a_2$), mindestens eines Monomeren mit einem Brechungsindex $n_D^{20}$ von mehr als 1,51 und

$a_{22}$) 0 bis 5 Gew.-%, bezogen auf $a_2$), eines polyfunktionellen, vernetzend wirkenden Monomeren

und

$a_3$) 10 bis 50 Gew.-%, bezogen auf A) mindestens einer weiteren, in Gegenwart des nach der Herstellung von $a_2$) erhaltenen Produkts polymerisierten Stufe aus

$a_{31}$) 50 bis 95 Gew.-%, bezogen auf $a_3$), eines vinylaromatischen Monomeren,

$a_{32}$) 5 bis 50 Gew.-%, bezogen auf $a_3$) polaren, copolymerisierbaren Comonomeren aus der Gruppe Acrylnitril, Methacrylnitril, Ester der (Meth)acrylsäure mit 1 bis 20 C-Atomen im Alkylrest, Maleinsäureanhydrid, (Meth)acrylamid und/oder Vinylalkylether mit 1 bis 8 C-Atomen im Alkylrest.

Um zu schlagzähen, thermoplastischen Formmasse zu gelangen, gibt man Pfropfkautschuke zu bei Raumtemperatur spröden Polymerisaten, die die Matrix bilden. Die Herstellung teilchenförmiger Pfropfpolymerisate aus einem kautschukelastischen Kern, d.h. einem Polymeren mit einer Glasübergangstemperatur von unter 0°C und einer Pfropfhülle mit einer Glasübergangstemperatur von über 25°C (Glasübergangstemperatur ermittelt nach der DSC-Methode; K.H. Illers, Makromol. Chemie 127 (1969) S. 1) zum Beispiel durch Emulsionspolymerisation, ist bekannt. Hierzu wird zunächst durch Emulsionspolymerisation geeigneter Monomerer eine Pfropfgrundlage hergestellt. Die Monomeren, die die Pfropfhülle bilden sollen, werden dann in Gegenwart der Pfropfgrundlage polymerisiert. Dabei werden die Monomeren für die äußerste Pfropfhülle in der Regel so gewählt, daß diese mit dem zu modifizierenden Thermoplasten verträglich oder teilverträglich ist. Die Herstellung solcher Schlagzähmodifier ist seit langem bekannt und zum Beispiel in der EP 132 339 beschrieben. Diese Pfropfkautschuke führen jedoch im allgemeinen zu einer Verschlechterung der Einfärbbarkeit der Thermoplaste. Dies gilt um so mehr, je größer die Kautschukteilchen sind und je größer der Unterschied der Brechungsindices der Matrix und der Kautschukteilchen ist (s. H.J. Biangardi, Angew. Makrom. Chem. 1990, 183, 221-241). In der EP 3 905 wird ein Verfahren zur Herstellung von großteiligen Emulsionspartikeln durch Quellung von kleineren Emulsionspartikeln, unter anderem mit organischen Lösungsmitteln oder mit Monomeren, die nach einer gewissen Rührzeit polymerisiert werden, beschrieben. Da diese Emulsionspartikel keine Pfropfhülle enthalten, sind sie zur Modifizierung von Thermoplasten nur schlecht einsetzbar.

Für viele Anwendungen ist es erforderlich, schlagzäh modifizierte thermoplastische Formmassen einzufärben, um Kundenwünsche zu befriedigen.

Der vorliegenden Erfindung lag daher die Aufgabe zugrunde, Wege zur Verbesserung der Einfärbbarkeit schlagzäh modifizierter thermoplastischer Formmassen aufzuzeigen bzw. Komponenten zur Herstellung solcher Formmassen zur Verfügung zu stellen.

Diese Aufgabe wurde erfindungsgemäß durch die teilchenförmigen Pfropfcopolymerisate gemäß Anspruch 1 sowie durch die thermoplastischen Formmassen gemäß Anspruch 2 gelöst.

Bevorzugte Ausführungsformen der Erfindung sind den Unteransprüchen und der folgenden Beschreibung zu entnehmen.

Das erfindungsgemäße Pfropfcopolymerisat enthält als Komponente $a_1$) 5 bis 70, vorzugsweise 10 bis 65 und insbesondere 15 bis 60 Gew.-%, bezogen auf A), einer Pfropfgrundlage mit einer Glasübergangstemperatur von weniger als 10°C, aufgebaut aus

$a_{11}$) 50 bis 99,94, vorzugsweise 55 bis 98 und insbesondere 60 bis 95 Gew.-%, bezogen auf $a_1$) eines Alkylacrylates mit 1 bis 30 C-Atomen im Alkylrest,

$a_{12}$) 0 bis 49,9, vorzugsweise 2 bis 45 und insbesondere 4 bis 40 Gew.-%, bezogen auf $a_1$) eines weiteren, mit $a_{11}$) copolymerisierbaren einfach ungesättigten Monomeren,

$a_{13}$) 0,01 bis 5, vorzugsweise 0,05 bis 4 und insbesondere 0,1 bis 4 Gew.-%, bezogen auf $a_1$) eines polyfunktionellen, vernetzend wirkenden Monomeren und

Bevorzugte Monomere $a_{11}$) sind Alkylacrylate mit 2 bis 30 C-Atomen im Alkylrest, insbesondere Ethylacrylat, tert.-, iso- und n-Butylacrylat und 2-Ethylhexylacrylat, wovon die beiden letztgenannten besonders bevorzugt werden.

Als bevorzugte Monomere $a_{12}$) seien Isopren, Butadien, Styrol, Acrylnitril, Methacrylnitril und/oder Vinylalkylether mit 1 bis 8 C-Atomen im Alkylrest (z.B. Vinylmethylether, Vinylpropylether, Vinylethylether) oder Mischungen derselben genannt.

Beispielhaft für vernetzend wirkende polyfunktionelle Monomere $a_{13}$) seien Divinylbenzol, Diallylmaleat, Diallylfumarat, Diallylphthalat und Dihydrodicyclopentadienylacrylat (DCPA, wie in der DE-A 12 60 135 beschrieben) genannt, wobei letzteres bevorzugt wird.

Beispielhaft seien weiter Triallylcyanurat und Triallylisocyanurat genannt.

Durch Verwendung der Comonomere $a_{12}$) und $a_{13}$) läßt sich das Eigenschaftsprofil der Polymerisate $a_1$) z.B. hinsichtlich Vernetzungsgrad steuern, was in manchen Fällen wünschenswert sein kann.

Verfahren zur Herstellung von Polymeren $a_1$) sind dem Fachmann bekannt, und in der Literatur beschrieben, z.B. in der DE-PS 1 260 135. Entsprechende Produkte sind auch kommerziell im Handel erhältlich.

Als besonders vorteilhaft hat sich in einigen Fällen die Herstellung durch Emulsionspolymerisation erwiesen.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel $d_{50}$) im Bereich von etwa 50 bis 700, insbesondere von 100 bis 600 nm aufweist.

Die Stufe $a_2$) der erfindungsgemäßen Pfropfcopolymerisate wird durch Polymerisation der entsprechenden Monomeren $a_{21}$) und gegebenenfalls $a_{22}$) in Gegenwart der Stufe $a_1$) hergestellt.

Als Monomere $a_{21}$) kommen grundsätzlich alle polymerisierbaren Monomeren mit einem Brechungsindex $n_D^{20}$ von mehr als 1,51 in Betracht. Bevorzugt werden vinylaromatische Monomere, z.B. Styrol oder substituierte Styrole der weiter unten genannten Formel I, besonders bevorzugt Styrol, α-Methylstyrol, p-Methylstyrol oder tert.-Butylstyrol.

Bei der Herstellung der Stufe $a_2$) hat es sich als vorteilhaft erwiesen, die Monomeren $a_{21}$) und gegebenenfalls $a_{22}$), gegebenenfalls zusätzlich mit einem Radikalstarter langsam zuzugeben und die so erhaltene Mischung über einen bestimmten Zeitraum zu durchmischen, bevor die Polymerisation selbst durch Temperaturerhöhung initiiert wird.

Auf die Pfropfgrundlage $a_1$) und $a_2$) ist eine dritte Stufe $a_3$) aufgepfropft, die durch Copolymerisation von

$a_{31}$) 50 bis 95, vorzugsweise 60 bis 90 und insbesondere 65 bis 80 Gew.-% eines vinylaromatischen Monomeren, vorzugsweise Styrol oder substituierten Styrolen der allgemeinen Formel I

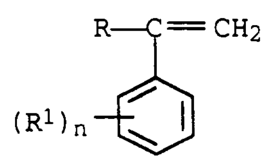

wobei R einen Alkylrest mit 1 bis 8 C-Atomen, ein Wasserstoffatom oder Halogen und $R^1$ Alkylreste mit 1 bis 8 C-Atomen oder ein Halogenatom darstellen und n den Wert 0, 1, 2 oder 3 hat, und

$a_{32}$) 5 bis 50, vorzugsweise 10 bis 40 und insbesondere 20 bis 35 Gew.-% polaren copolymerisierbaren Monomeren Acrylnitril, Methacrylnitril, Ester der Meth(acrylsäure) mit 1 bis 20 C-Atomen im Alkylrest, Maleinsäureanhydrid, (Meth)acrylamid Vinylalkylether mit 1-8 C-Atomen im Alkylrest und/oder Phenylmaleinimid oder deren Mischungen

erhalten wird.

Die Pfropfhülle $a_3$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357, DE-OS 31 49 358 und der DE-OS 34 14 118 beschrieben ist.

Je nach den gewählten Bedingungen entsteht bei der Pfropfmischpolymerisation ein bestimmter Anteil an freien Copolymerisaten von Styrol und Acrylnitril.

Das erfindungsgemäße Pfropfcopolymerisat weist im allgemeinen eine mittlere Teilchengröße von vorzugsweise 50 bis 1000 nm, insbesondere von 100 bis 700 nm ($d_{50}$-Gewichtsmittelwert) auf. Die Bedingungen bei der Herstellung des Elastomeren $b_1$) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938, beschrieben. Die Teilchenvergrößerung des Latex des Elastomeren kann z.B. mittels Agglomeration bewerkstelligt werden.

In einigen Fällen haben sich auch Mischungen aus mehreren Acrylester-Polymerisaten bewährt, die unterschiedliche Teilchengrößen aufweisen. Entsprechende Produkte sind in der DE-OS 28 26 925 und dem US-Patent 5,196,480 beschrieben, auf die hier wegen näherer Details verwiesen sei.

Demzufolge werden als bevorzugte Mischungen von Acrylesterpolymerisaten solche eingesetzt, in denen ein erstes Polymer eine Teilchengröße $d_{50}$ im Bereich von 50 bis 150 nm und ein zweites Polymer eine Teilchengröße von 200 bis 700 nm aufweist, wie sie in der bereits erwähnten US-PS 5,196,480 beschrieben werden.

Eine weitere Ausführungsform der Erfindung betrifft thermoplastische Formmassen, die neben dem erfindungsgemäßen Pfropfcopolymeren (A) ein weiteres thermoplastisches Polymerisat B mit einer Glasübergangstemperatur von mehr als 20°C enthalten. Das Mengenverhältnis A:B liegt dabei im allgemeinen im Bereich von 5:95 bis 95:5, vorzugsweise 10:90 bis 90:10 und insbesondere 80:20 bis 20:80.

Bevorzugte Polymerisate B sind Polymere auf der Basis von Methylmethacrylat, insbesondere Polymethylmethacrylat sowie Copolymerisate aus 50 bis 95, vorzugsweise 55 bis 90 und insbesondere 60 bis 85 Gew.-% vinylaromatischen Monomeren und 5 bis 50, vorzugsweise 10 bis 45 und besonders bevorzugt 15 bis 40 Gew.-% polaren copolymerisierbaren Monomeren aus der Gruppe Acrylnitril, Methacrylnitril, Ester der (Meth)Acrylsäure mit 1 bis 4 C-Atomen in Alkylrest, Maleinsäureanhydrid, (Meth)acrylamid, Vinylalkylether mit 1 bis 8 C-Atomen im Alkylrest und oder Phenylmaleinimid oder deren Mischungen.

Als vinylaromatische Monomere haben sich Styrol und substituierte Styrole der allgemeinen Formel I

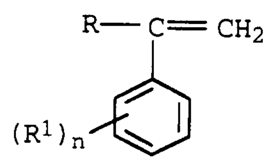

wobei R einen Alkylrest mit 1 bis 8 C-Atomen, ein Wasserstoffatom oder Halogen und $R^1$ Alkylreste mit 1 bis 8 C-Atomen oder ein Halogenatom darstellen und n den Wert 0, 1, 2 oder 3 hat, bewährt.

Verfahren zur Herstellung von Polymeren B sind dem Fachmann bekannt; entsprechende Produkte sind kommerziell erhältlich.

Als Komponente C) können die erfindungsgemäßen Formmassen 0 bis 50, vorzugsweise 5 bis 45 und insbesondere 10 bis 40 Gew.-% faser- oder teilchenförmige Füllstoffe oder deren Mischungen enthalten.

Als Beispiele für Füllstoffe seien Kohlenstoff- oder Glasfasern in Form von Glasgeweben, Glasmatten oder Glasseidenrovings, Glaskugeln sowie Wollastonit genannt, besonders bevorzugt Glasfasern.

Bei der Verwendung von Glasfasern können diese zur besseren Verträglichkeit mit den Blendkomponenten mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Die mittlere Länge der Glasfasern liegt im Bereich von 0,05 bis 0,5 mm, vorzugsweise von 0,08 bis 0,45 mm (im Spritzgußteil).

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (vorzugsweise kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Als Komponente D können in den erfindungsgemäßen thermoplastischen Formmassen bis zu 30, vorzugsweise 0,5 bis 10 Gew.-% übliche Zusatzstoffe und Verarbeitungshilfsmittel enthalten sein.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel, Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie sterisch gehinderte Phenole, Hydrochinone, verschiedene substituierte Vertreter dieser Gruppe um Kombinationen derselben in Konzentrationen bis 1 Gew.-%, bezogen auf das Gewicht der Mischung.

Als Stabilisatoren kann man ebenfalls diejenigen, die allgemein zu Polymeren zugesetzt werden, in Mengen bis zu 2,0 Gew.-% auf die Mischung verwenden.

Beispiele für Stabilisatoren sind verschiedene substituierte Resorcine, Salicylate, Benzotriazole, Benzophenone HALS-Stabilisatoren und dergleichen, wie sie unter den Handelsnamen Topanol® und Irganox® und Tinuvin® kommerziell erhältlich sind.

Geeignete Gleit- und Entformungsmittel, die z.B. in Mengen bis zu 7 Gew.-% der thermoplastischen Masse zugesetzt werden, sind Stearinsäuren, Stearylalkohol, Stearinsäureester und -amide.

Eine weiterer möglicher Zusatzstoff sind Siliconöle, vorzugsweise in Mengen von 0,05 bis 1 Gew.-%.

Ferner können zugesetzt werden organische Farbstoffe, wie Nigrosin, Pigmente, z.B. Titandioxid, Cadmiumsulfid, Cadmiumsulfid-selenid, Phthalocyanine Ultramarinblau oder Ruß.

Die Abmischung der Komponenten A), B) und gegebenenfalls C) und/oder D) erfolgt in der Regel nach an sich bekannten und in der Literatur beschriebenen Verfahren in der Schmelze, vorzugsweise auf Extrudern.

Die erfindungsgemäßen Formmassen weisen gute Zähigkeiten in Kombination mit guter Einfärbbarkeit auf. Die Einfärbung bzw. Pigmentierung kann dabei nach an sich bekannten Verfahren erfolgen.

Aufgrund ihres Eigenschaftsspektrums eignen sich die erfindungsgemäßen thermoplastischen Formmassen besonders zur Herstellung von farbigen Formteilen aller Art wie Fasern, Folien und Formkörpern.

Beispiele 1 bis 3 (Herstellung von Kautschukkomponenten)

Beispiel 1

Herstellung von Pfropfcopolymer A1

1. Herstellung von Kautschuk 1

1.1 Herstellung der Pfropfgrundlage $a_1$)

Ein Monomerengemisch aus 3,2 g Acrylsäureester des Tricyclodecenylalkohols und 156,8 g Acrylsäurebutylester wurde in 1500 g Wasser unter Zusatz von 5 g des Kaliumsalzes einer $C_{12}$- bis $C_{18}$-Paraffinsulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden eine Mischung aus weiteren 16,8 g Acrylsäureester des Tricyclodecenylalkohols und 823,2 g Acrylsäurebutylester zudosiert. Nach Beendigung der Monomerzugabe wurde die Emulsion noch eine Stunde bei 65°C gehalten.

1.2 Herstellung der Zwischenstufe $a_2$)

Ein Gemisch aus 1764 g Styrol, 36 g Acrylsäureester des Tricyclodecenylalkohols und 3,6 g Benzoylperoxid wurde bei 30°C zu einem Gemisch aus 450 g der Pfropfgrundlage 1.1., 2600 g Wasser und 3,6 g des Kaliumsalzes einer $C_{12}$- bis $C_{18}$-Paraffinsulfonsäure innerhalb von 4 Stunden zugegeben, 3 Stunden bei 30°C gerührt, dann die Temperatur bis zum vollständigen Umsatz auf 65°C erhöht.

1.3 Herstellung der Stufe $a_3$)

2100 g der nach obiger Vorschrift (1.2.) hergestellten Emulsion wurden mit 1150 g Wasser, 2,7 g Kaliumperoxodisulfat gemischt und unter Rühren auf 65°C erwärmt. Nach Erreichen der Reaktionstemperatur wurden im Lauf von 3 Stunden ein Monomerengemisch aus 495 g Styrol und 165 g Acrylnitril zudosiert. Nach Beendigung der Zugabe wurde die Emulsions noch 2 Stunden bei 65°C gehalten. Das Pfropfcopolymerisat besaß eine mittlere Teilchengröße von 210 nm. Das Pfropfpolymerisat wurde mittels Calciumchloridlösung bei 95°C aus der Emulsions gefällt, mit Wasser gewaschen und im warmen Luftstrom getrocknet.

Beispiel 2

Herstellung von Pfropfcopolymer A2

2. Herstellung von Kautschuk 2

2.1 Herstellung der Pfropfgrundlage $a_1$)

12,5 g der nach Vorschrift 1.1 hergestellten Emulsion wurde mit 1500 g Wasser unter Zusatz von 3 g Kaliumperoxodisulfat, 3 g Natriumhydrogencarbonat und 1,5 g Natriumpyrophosphat unter Rühren auf 65°C erwärmt. Innerhalb von 3 Stunden wurde eine Mischung aus 20 g Acrylsäureester des Tricyclodecenylalkohols und 980 g Acrylsäurebutylester sowie 3 g des Kaliumsalzes einer $C_{12}$- bis $C_{18}$-Paraffinsulfonsäure zudosiert. Nach Beendigung der Monomerzugabe wurde die Emulsion noch eine Stunde bei 65°C gehalten.

2.2 Herstellung der Zwischenstufe $a_2$

Die Herstellung der Zwischenstufe erfolgte wie unter 1.2. beschrieben, wobei anstelle der Emulsion 1.1. die nach der Vorschrift 2.1. hergestellte Emulsion eingesetzt wurde.

2.3 Herstellung der Stufe $a_3$)

2100 g der nach obiger Vorschrift (2.2.) hergestellten Emulsion wurden mit 1150 g Wasser, 2,7 g Kaliumperoxodisulfat gemischt und unter Rühren auf 65°C erwärmt. Nach Erreichen der Reaktionstemperatur wurden im Lauf von 1 Stunde ein Monomerengemisch aus 165 g Styrol sowie 0,1 g des Kaliumsalzes einer $C_{12}$-bis $C_{18}$-Paraffinsulfonsäure zudosiert. Nach Beendigung der Zugabe wurde eine Mischung aus 372 g Styrol und 124 g Acrylnitril zudosiert. Nach Beendigung der Zugabe wurde die Emulsion noch 2 Stunden bei 65°C gehalten. Die mittlere Teilchengröße der Pfropfpolymerisate betrug 610 nm. Das Pfropfpolymerisat wurde mittels Calciumchloridlösung bei 95°C aus der Emulsions gefällt, mit Wasser gewaschen und im warmen Luftstrom getrocknet.

Beispiel 3

Herstellung von Pfropfcopolymer A3

Die Herstellung von Kautschuk 3 erfolgte wie unter 1. beschrieben, jedoch wurden bei der Herstellung der Zwischenstufe nur 850 g Styrol eingesetzt. Das Pfropfcopolymerisat besaß eine mittlere Teilchengröße von 180 nm.

Vergleichsversuche

Bei den Vergleichsversuchen wurde keine Zwischenstufe hergestellt, d.h. die Pfropfgrundlagen 1.1. und 2.1. wurden direkt mit Styrol und Acrylnitril, wie unter 1.3, 2.3 bzw. 3 beschrieben, gepfropft. Die mittleren Teilchengrößen der entsprechenden Pfropfkautschuk betrugen:

Vergleichspfropfkautschuk 1.:
105 nm
Vergleichspfropfkautschuk 2.:
480 nm.

Beispiel 4 bis 7

Herstellung von Formmassen

Zur Herstellung der erfindungsgemäßen Formmassen wurde als Komponente B ein Styrol/Acrylnitril-Copolymerisat mit einem Acrylnitril-Gehalt von 35 % und einer Viskositätszahl von 80 ml/g (die Viskositätszahlen wurden an einer 0,5 %igen Lösung in DMF bei 23°C bestimmt) verwendet. Die gefällten und getrockneten Pfropfmischpolymerisate wurden auf einem Extruder mit der Komponente B bei 260°C abgemischt, so daß der Gehalt an Komponente A 50 Gew.-% betrug. Aus diesem Gemisch wurden Formteile hergestellt, an denen dE bestimmt wurde.

Die dE-Werte wurden nach DIN 6174 aus einer Farbdifferenzverbesserung der Prüfkörper über weißem und schwarzem Untergrund errechnet.

dE-Werte der Abmischungen mit den Kautschuken 1 bis 3 und der Vergleichsversuche:

| | dE |
|---|---|
| Abmischung mit Pfropfpolymerisat A1 | 21 |
| Abmischung mit Pfropfpolymerisat A2 | 12 |
| Abmischung mit Pfropfpolymerisat A3 | 17 |
| Abmischung mit Vergleichspfropfkautschuk 1 | 7 |
| Abmischung mit Vergleichspfropfkautschuk 2 | 2 |

**Patentansprüche**

1. Teilchenförmige Pfropfcopolymerisate A), aufgebaut aus

$a_1$) 5 bis 70 Gew.-%, bezogen auf A), einer Pfropfgrundlage mit einer Glasübergangstemperatur von weniger als 10°C auf der Basis von

$a_{11}$) 50 bis 99,94 Gew.-%, bezogen auf $a_1$), mindestens eines Alkylacrylats mit 1 bis 30 C-Atomen im Alkylrest,

$a_{12}$) 0 bis 49,9 Gew.-%, bezogen auf $a_1$), eines weiteren, mit $b_{11}$) copolymerisierbaren einfach ungesättigten Monomeren

$a_{13}$) 0,01 bis 5 Gew.-%, bezogen auf $a_1$), polyfunktionellen vernetzend wirkenden Monomeren und

$a_2$) 20 bis 85 Gew.-%, bezogen auf A), einer in Gegenwart der Komponente $a_1$) polymerisierten Stufe aus

$a_{21}$) 95 bis 100 Gew.-%, bezogen auf $a_2$), mindestens eines Monomeren mit einem Brechungsindex $n_D^{20}$ von mehr als 1,51 und

$a_{22}$) 0 bis 5 Gew.-%, bezogen auf $a_2$), eines polyfunktionellen, vernetzend wirkenden Monomeren

und

$a_3$) 10 bis 50 Gew.-%, bezogen auf A), mindestens einer weiteren, in Gegenwart des nach der Herstellung von $a_2$) erhaltenen Produkts, polymerisierten Stufe aus

$a_{31}$) 50 bis 95 Gew.-%, bezogen auf $a_3$), eines vinylaromatischen Monomeren,

$a_{32}$) 5 bis 50 Gew.-%, bezogen auf $a_3$) polaren, copolymerisierbaren Comonomeren aus der Gruppe Acrylnitril, Methacrylnitril, Ester der (Meth)acrylsäure mit 1 bis 20 C-Atomen im Alkylrest, Maleinsäureanhydrid, (Meth)acrylamid und/oder Vinylalkylether mit 1 bis 8 C-Atomen im Alkylrest.

2. Thermoplastische Formmassen, enthaltend

A) ein teilchenförmiges Pfropfcopolymerisat gemäß Anspruch 1
B) ein von A verschiedenes thermoplastisches Polymerisat mit einer Glasübergangstemperatur von mehr als 20°C.

3. Thermoplastische Formmassen nach Anspruch 2, enthaltend als Komponente B) ein Copolymerisat aus

$b_1$) 50 bis 90 Gew.-% Styrol und/oder $\alpha$-Methylstyrol und
$b_{21}$) 10 bis 50 Gew.-% (Meth)acrylnitril und oder Methyl(meth)acrylat
$b_{22}$) 0 bis 40 Gew.-% andere Monomere $b_2$).

**4.** Verwendung der Pfropfcopolymerisate gemäß Anspruch 1 zur Verbesserung der Einfärbbarkeit von thermoplastischen Formmassen.